# EUROPEAN PATENT SPECIFICATION

(11) **EP 3 490 304 B1**
(45) Date of publication and mention of the grant of the patent: **25.10.2023**
(21) Application number: 17877516.9
(22) Date of filing: 12.09.2017
(51) Int. Cl.: H04W 48/16, H04W 48/20, H04W 84/12

(54) **METHOD FOR IDENTIFYING ACCESS POINT AND HOTSPOT, AND RELATED PRODUCTS**
VERFAHREN ZUR IDENTIFIZIERUNG EINES ZUGANGSPUNKTES UND HOTSPOTS UND ZUGEHÖRIGE PRODUKTE
PROCÉDÉ D'IDENTIFICATION D'UN POINT D'ACCÈS ET D'UN POINT D'ACCÈS SANS FIL, ET PRODUITES ASSOCIÉES

(30) Priority: 07.12.2016 CN 201611117899
(43) Date of publication of application: 29.05.2019
(73) Proprietor: GUANGDONG OPPO MOBILE TELECOMMUNICATIONS CORP., LTD., Wusha, Chang'an Dongguan, Guangdong 523860 (CN)
(72) Inventor: LIU, Wenjie, Dongguan Guangdong 523860 (CN)
(74) Representative: Manitz Finsterwald Patent- und Rechtsanwaltspartnerschaft mbB
(86) International application number: PCT/CN2017/101467
(87) International publication number: WO 2018/103405

(56) References cited:
- WO-A1-2016/000589
- CN-A- 103 313 429
- CN-A- 103 313 429
- CN-A- 103 442 376
- CN-A- 103 442 376
- CN-A- 105 142 217
- CN-A- 105 578 492
- CN-A- 106 851 779
- US-A1- 2012 176 946
- US-A1- 2015 089 595

## Description

### TECHNICAL FIELD

The present disclosure relates to the field of Internet technology, and more particularly to a method for identifying an access point (AP) and a hotspot, and related products.

### BACKGROUND

With the rapid development of information technology, mobile terminals (such as mobile phones, tablets, etc.) are becoming more and more popular. The performance of the mobile terminals required by users is increasingly higher, not only high processing speed is required, but also the consumption of traffic of the mobile terminals is cared by the users.

In the related art, generally, when the mobile terminal is in a Wi-Fi connection, the mobile terminal determines by default that network communication can be conducted via a wireless fidelity (Wi-Fi).

CN 103313429A relates to a processing method for recognizing a fabricated WIFI hotspot. The processing method for recognizing the fabricated WIFI hotspot comprises the steps of a) pre-collecting and storing an Internet Protocol (IP) address list of WIFI hotspots; b) obtaining, by a client, a source IP address and a port in a request message sent from a certain WIFI hotspot; c) retrieving the source IP in the pre-stored IP address list of the WIFI hotspots for performing a first authenticity verification of a WIFI hotspot; d) continuing sending handshake messages to the source IP address and the port for performing a second authenticity verification of the WIFI hotspot; and e) determining that the WIFI hotspot is a fabricated WIFI hotspot once the verification fails once.

CN 105142217A relates to a method that comprises the steps of verifying a preset MAC address list via a server background, and sending a network push request to an application in a mobile terminal to require the application in the mobile terminal to upload the MAC address of the WiFi hotspot coupled with the application in the mobile terminal; coupling the application in the mobile terminal to the WiFi hotspot; coupling the application in the mobile terminal with a server, and returning the MAC address of the WiFi hotspot coupled with the application in the mobile terminal to the server; comparing, by the server, the MAC address of the WiFi hotspot coupled with the application in the mobile terminal with the preset MAC address list; if the MAC address of the WiFi hotspot is contained in the preset MAC address list, determining that the positioning is successful, and if the MAC address of the WiFi hotspot is not contained in the preset MAC address list, determining that the positioning is unsuccessful.

CN1034423 76A relates to a wireless hotspot identification method that comprises the following. A dynamic host configuration protocol (DHCP) data packet sent by a terminal is received. If the DHCP data packet is a data request packet, the type of a network interface which receives the data request packet is obtained. If the data request packet contains hotspot identification information, the hotspot identification information is replaced with information containing a hotspot identification corresponding to the type of the network interface, and then the data request packet is updated. If the data request packet does not contain the hotspot identification information, the information containing the hotspot identification corresponding to the type of the network interface is packaged into the data request packet.

### SUMMARY

A method for identifying an AP and a hotspot, and related products are provided according to embodiments of the present disclosure, which can distinguish between the hotspot and the AP

In a first aspect of the present disclosure, a method for identifying an AP and a hotspot as set out in claim 1 is provided.

In a second aspect of the present disclosure, a mobile terminal is provided. The mobile terminal includes a processor, a memory, and one or more programs. The one or more programs are stored in the memory and configured to be executed by the processor. The programs include instructions which are operable to implement part or all of the operations described in the first aspect.

In a third aspect of the present disclosure, a computer storage medium as set out in claim 9 is provided.

### BRIEF DESCRIPTION OF THE DRAWINGS

To describe technical solutions in embodiments of the present disclosure more clearly, the following briefly introduces the accompanying drawings required for describing the embodiments. Apparently, the accompanying drawings in the following description merely illustrate some embodiments of the present disclosure. Those of ordinary skill in the art may also obtain other drawings based on these accompanying drawings without creative efforts.
FIG. 1 is a flow chart illustrating a method for identifying an AP and a hotspot according to a first embodiment of the present disclosure.
FIG. 1a is a schematic diagram illustrating a Wi-Fi list according to an embodiment of the present disclosure.
FIG. 2 is a flow chart illustrating a method for identifying an AP and a hotspot according to a second embodiment of the present disclosure.
FIG. 3 is a flow chart illustrating a method for identifying an AP and a hotspot according to a third embodiment of the present disclosure.
FIG. 4a is a block diagram illustrating a device for identifying an AP and a hotspot according to an embodiment of the present disclosure.
FIG. 4b is another block diagram illustrating the device for identifying an AP and a hotspot illustrated in FIG. 4a according to an embodiment of the present disclosure.
FIG. 4c is yet another block diagram illustrating the device for identifying an AP and a hotspot illustrated in FIG. 4a according to an embodiment of the present disclosure.
FIG. 4d is a block diagram illustrating an upgrading unit of the device for identifying an AP and a hotspot illustrated in FIG. 4c according to an embodiment of the present disclosure.
FIG. 5 is a block diagram illustrating a mobile terminal according to an embodiment of the present disclosure.

### DETAILED DESCRIPTION

In general, when in a wireless fidelity (Wi-Fi) connection, a mobile terminal automatically updates at least one application to be upgraded by default. At this point, if the mobile terminal is connected to a hotspot shared by another mobile terminal, the another mobile terminal generates more data traffic. However, at present, the mobile terminal is unable to distinguish between a hotspot and an access point (AP). To this end, embodiments of the present disclosure provide a method for identifying an AP and a hotspot, and related products, which can distinguish between a hotspot and an AP.

Hereinafter, technical solutions embodied by the embodiments of the disclosure will be described in a clear and comprehensive manner in reference to the accompanying drawings intended for the embodiments. It is evident that the embodiments described herein constitute merely some rather than all of the embodiments of the disclosure. Based on the embodiments of the present disclosure, other embodiments derived by those of ordinary skill in the art without creative efforts all fall in the protection scope of the present disclosure.

The terms "first", "second", "third", "fourth", and the like used in the specification, the claims, and the accompany drawings of the present disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

The term "embodiment" or "implementation" referred to herein means that a particular feature, structure, or feature described in conjunction with the embodiment may be contained in at least one embodiment of the present disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.

"Mobile terminal" in the embodiments of the disclosure may include smart phones (such as Android^{®} phones, iOS^{®} phones, Windows Phones, etc.), tablet PCs, palmtops, on-board equipment, laptops, mobile Internet devices (MID), wearable devices, or the like. The above-mentioned terminals are merely illustrative and not exhaustive, including but not limited to the above-described mobile terminals.

Generally, a router is equipped with a dynamic host configuration protocol (DHCP) server. The DHCP server can assign an internet protocol (IP) address to a mobile terminal, that is, an IP address of the mobile terminal. An IP address of a gateway is attached to an Offer message and an acknowledgement (ACK) message replied by the DHCP server in a process that the mobile terminal obtains an IP address through a DHCP protocol. A routing path is formed between the IP address of the mobile terminal and the IP address of the gateway. The mobile terminal is in communication with the router via the routing path, that is, data transmission can be performed between the mobile terminal and the router.

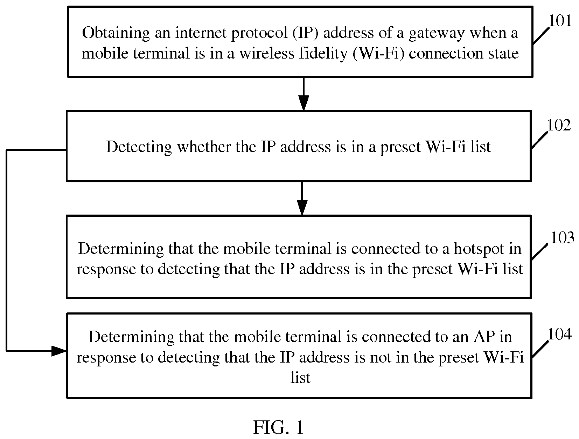

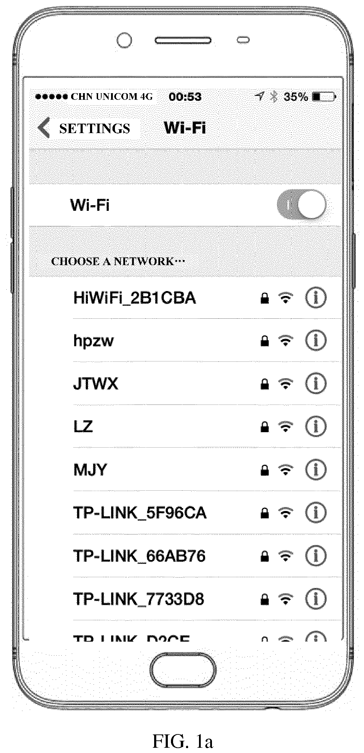

FIG. 1 is a flow chart illustrating a method for identifying an AP and a hotspot according to a first embodiment of the present disclosure. The method for identifying an AP and a hotspot provided in the first embodiment includes the following.

At 101, an IP address of a gateway is obtained when a mobile terminal is in a Wi-Fi connection state.

When the mobile terminal is in the Wi-Fi connection state, the mobile terminal may be connected to a router, or connected to a hotspot. In the process of connecting the mobile terminal to the router (i.e., an AP), the DHCP server built in the router can assign an IP address to the mobile terminal, where the IP address is referred to as an IP address of a gateway. In the process of connecting the mobile terminal to the hotspot, the hotspot can assign an IP address to the mobile terminal, where the IP address is also referred to as an IP address of a gateway. Since different objects can act as different gateways, IP addresses of different gateways are different accordingly. Therefore, by merely distinguishing IP addresses of gateways, it can be determined whether the IP address of the gateway is an IP address of an AP or an IP address of a hotspot.

In one embodiment, when the mobile terminal is in the Wi-Fi connection state, a routing path (i.e., a routing path formed between the IP address of the mobile terminal and the IP address of the gateway, the routing path can be used to receive or transmit data) can be obtained, and the IP address of the gateway can be obtained from the routing path.

At 102, whether the IP address is in a preset Wi-Fi list is detected.

In one embodiment, the preset Wi-Fi list may be pre-stored in the mobile terminal before the operation at 101. Generally, an IP address assigned by a hotspot has certain characteristics, and so part of IP addresses assigned by the hotspot can be stored to form the preset Wi-Fi list. Therefore, when the IP address is contained in the preset Wi-Fi list, it means that the mobile terminal is connected to a hotspot; when the IP address is not contained in the preset Wi-Fi list, it means that the mobile terminal is connected to an AP. As illustrated in FIG. 1a, a schematic diagram illustrating the preset Wi-Fi list is provided.

In one embodiment, the preset Wi-Fi list contains at least one of 192.168.40.*X* and 172.20.19.*Y*, where *X* and *Y* are integers ranging from 0 to 255. For example, when the IP address of the gateway is 192.168.40.1, it indicates that the mobile terminal is connected to a hotspot. Furthermore, along with the evolution of technologies, the standard of communication may also change. In this case, the preset Wi-Fi list mentioned above may be re-defined.

At 103, the mobile terminal is determined to be connected to a hotspot when the IP address is in the preset Wi-Fi list.

At 104, the mobile terminal is determined to be connected to an AP when the IP address is not in the preset Wi-Fi list.

When the IP address is in the preset Wi-Fi list, it indicates that the mobile terminal is connected to the hotspot. When the preset Wi-Fi list does not contain the IP address, it indicates that the mobile terminal is connected to the AP Therefore, it can be determined whether the mobile terminal is connected to the hotspot or the AP when the mobile terminal is in the Wi-Fi connection state. When the mobile terminal is connected to the hotspot, since the hotspot is generally based on a mobile communication network (e.g., 2G, 3G, 4G, etc.), charging of traffic is often expensive. In this case, when part of applications in the mobile terminal need to be upgraded, much traffic is required to be consumed. When the mobile terminal is connected to the AP, since the AP is generally based on a router, it is not necessary to consider the consumption of traffic, therefore, in this situation, applications in the mobile terminal which need to be upgraded can be upgraded.

What needs to be illustrated is that, in general, the mobile terminal can obtain the IP address of the gateway when the mobile terminal is in the Wi-Fi connection state, and determine whether the IP address is in the preset Wi-Fi list. The preset Wi-Fi list contains at least one of 192.168.40.*X* and 172.20.19.Y, where *X* and *Y* are integers ranging from 0 to 255. When the IP address is in the preset Wi-Fi list of the current gateway, it means that the mobile terminal is connected to the hotspot; otherwise, it means that the mobile terminal is connected to the AP.

It can be seen that, by means of the embodiments of the present disclosure, the IP address of the gateway is obtained when the mobile terminal is in the Wi-Fi connection state. Whether the IP address is in the preset Wi-Fi list is detected. The mobile terminal is determined to be connected to the hotspot when the IP address is in the preset Wi-Fi list. The mobile terminal is determined to be connected to the AP when the IP address is not in the preset Wi-Fi list. Therefore, whether the mobile terminal is connected to the hotspot or the AP can be distinguished.

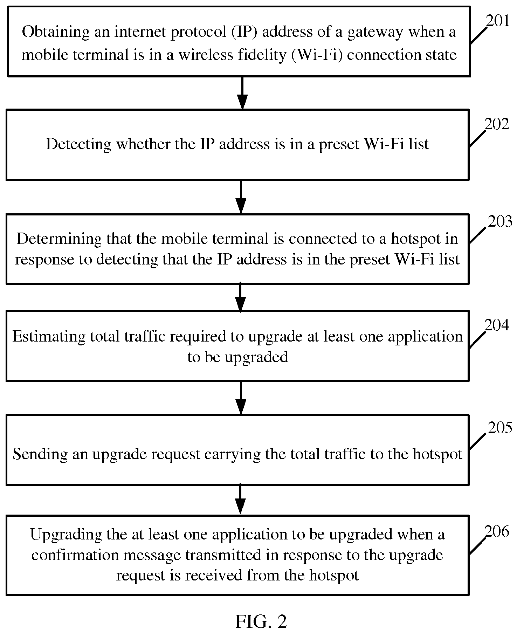

Consistent with the above embodiment, FIG. 2 is a flow chart illustrating a method for identifying an AP and a hotspot according to a second embodiment of the present disclosure. The method for identifying an AP and a hotspot provided in the second embodiment includes the following.

At 201, an IP address of a gateway is obtained when a mobile terminal is in a Wi-Fi connection state.

At 202, whether the IP address is in a preset Wi-Fi list is detected.

At 203, the mobile terminal is determined to be connected to a hotspot when the IP address is in the preset Wi-Fi list.

For the operations at 201 to 203, reference can be made to the corresponding operations of the method for identifying an AP and a hotspot described in conjunction with FIG. 1, which will not be repeated herein.

At 204, total traffic required by at least one application to be upgraded is estimated.

In one embodiment, the at least one application to be upgraded may include one or more applications. The at least one application to be upgraded may be a type of applications, that is, applications that need to be upgraded are collectively referred to as applications to be upgraded. For different applications, traffic that needs to be consumed during upgrade operation may be different. Therefore, the traffic that needs to be consumed during upgrade operation of each application to be upgraded needs to be estimated. The at least one application to be upgraded includes, but is not limited to, a map application (e.g., Baidu map^{®}, Google map^{®}, etc.), an instant messenger application (e.g., WeChat^{®}, QQ^{®}, etc.), a social application (e.g., Weibo^{®}, Renren^{®}, Facebook^{®}, etc.), a group purchase application (e.g., Dazhongdianping^{®}, Meituan^{®}, etc.), a browser application, a payment application, and the like. The at least one application to be upgraded may include one or more applications to be upgraded. When the at least one application to be upgraded includes one application to be upgraded, the amount of traffic required by the application to be upgraded to the latest version can be estimated. In an implementation, the current version of the application to be upgraded can be compared with the latest version to determine the amount of data to-be-downloaded, and the traffic consumed by upgrade of the application to be upgraded can be estimated according to the amount of data.

In one embodiment, the at least one application to be upgraded includes multiple applications to be upgraded. For the operation at 204, the total traffic required by the at least one application to be upgraded is estimated as follows.

Traffic required by upgrade of each application to be upgraded is estimated. The total traffic is obtained by adding up the traffic required by upgrade of each application to be upgraded.

When the at least one application to be upgraded includes multiple applications to be upgraded, the traffic required by upgrade of each application to be upgraded can be estimated, and then the total traffic required by the applications to be upgraded can be obtained by adding up the traffic required by upgrade of each application to be upgraded.

At 205, an upgrade request carrying the total traffic is sent to the hotspot.

The mobile terminal can send the upgrade request to the hotspot, where the upgrade request carries the total traffic. Assuming that the hotspot has been set, for example, to grant the upgrade request under the condition that the traffic requested via the upgrade request is lower than a preset threshold, the hotspot can automatically send a confirmation message to the mobile terminal in response to the upgrade request. Certainly, the hotspot often grants the upgrade request of the mobile terminal in response to a permission instruction. As an example, the hotspot receives a confirmation instruction and sends the confirmation message to the mobile terminal in response to the upgrade request.

At 206, the at least one application to be upgraded is upgraded when the confirmation message transmitted in response to the upgrade request is received from the hotspot.

The mobile terminal can upgrade the at least one application to be upgraded when the confirmation message transmitted in response to the upgrade request is received from the hotspot.

In one embodiment, the at least one application to be upgraded includes multiple applications to be upgraded. For the operation at 206, the at least one application to be upgraded is upgraded as follows.

A usage frequency of each application to be upgraded is obtained. All the applications to be upgraded are upgraded in descending order of the usage frequencies of the applications to be upgraded.

When the at least one application to be upgraded includes multiple applications to be upgraded, the usage frequency of each application to be upgraded can be obtained, and all the applications to be upgraded are upgraded in the descending order of the usage frequencies of the applications to be upgraded. For example, the applications to be upgraded include an App A, an App *B,* and an App *C*, where the usage frequency of the App *B* is greater than that of the App *A,* and the usage frequency of the App *A* is greater than that of the App *C*. In this case, the App *B* is upgraded first, the App *A* is then upgraded after upgrading the App *B,* and after upgrading the App *A*, the App *C* is upgraded.

In one embodiment, the at least one application to be upgraded includes multiple applications to be upgraded. For the operation at 206, the at least one application to be upgraded is upgraded as follows.

Traffic required by upgrade of each application to be upgraded is determined. All the applications to be upgraded are upgraded in ascending order of the traffic required by upgrade of each application to be upgraded.

When the at least one application to be upgraded includes multiple applications to be upgraded, the traffic required by upgrade of each application to be upgraded can be determined, and all the applications to be upgraded are upgraded in ascending order of the traffic required by upgrade of each application to be upgraded. For instance, the applications to be upgraded include the App *A*, the App *B,* and the App *C*, where the traffic required by upgrading the App *B* is greater than that of the App *A*, and the traffic required by upgrading the App *A* is greater than that of the App *C*. In this situation, the App *C* is upgraded first, the App *A* is then upgraded after upgrading the App *C*, and after upgrading the App *A*, the App *B* is upgraded.

In one embodiment, when the at least one application to be upgraded includes multiple applications to be upgraded, part of the multiple applications to be upgraded may be upgraded first, and then the remaining applications may be upgraded.

In one embodiment, the at least one application to be upgraded includes multiple applications to be upgraded. For the operation at 206, the at least one application to be upgraded is upgraded as follows.

Multiple categories are obtained by classifying the multiple applications to be upgraded. A priority of each of the multiple categories is determined. All the applications to be upgraded are upgraded according to the priority of each of the multiple categories.

When the at least one application to be upgraded includes multiple applications to be upgraded, the multiple categories can be obtained by classifying the multiple applications to be upgraded. The priority of each of the multiple categories can be determined. All the applications to be upgraded can be upgraded according to the priority of each of the multiple categories. Therefore, the multiple applications can be upgraded according to the priorities of the categories.

According to the embodiment of the present disclosure, the IP address of the gateway is obtained when the mobile terminal is in the Wi-Fi connection state. Whether the IP address is in the preset Wi-Fi list is detected. The mobile terminal is determined to be connected to the hotspot when the IP address is in the preset Wi-Fi list. The total traffic required by the at least one application to be upgraded is estimated. The upgrade request carrying the total traffic is sent to the hotspot. The at least one application to be upgraded is upgraded when the confirmation message transmitted in response to the upgrade request is received from the hotspot. Therefore, whether the mobile terminal is connected to the hotspot or the AP can be distinguished. Moreover, in the case that the mobile terminal is connected to the hotspot, the total traffic required by the at least one application to be upgraded can be estimated, and the upgrade operation is performed only after receiving the confirmation message transmitted by the hotspot.

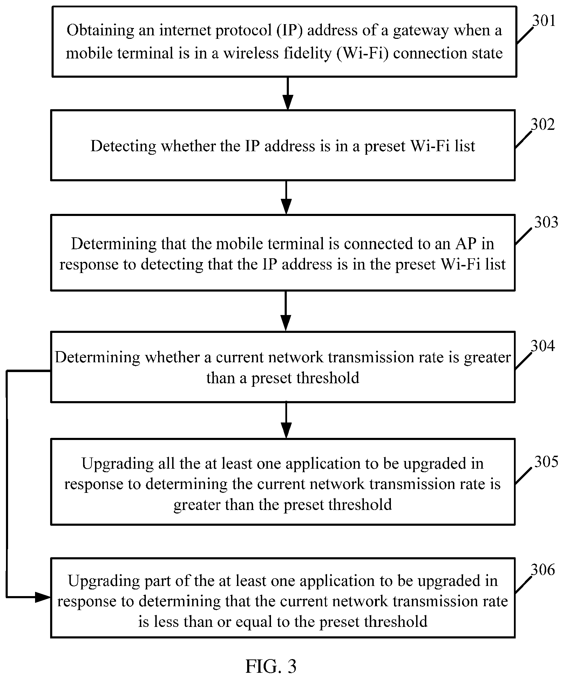

Consistent with the above embodiment, FIG. 3 is a flow chart illustrating a method for identifying an AP and a hotspot according to a third embodiment of the present disclosure. The method for identifying an AP and a hotspot provided in the third embodiment includes the following.

At 301, an IP address of a gateway is obtained when a mobile terminal is in a Wi-Fi connection state.

At 302, whether an IP address is in a preset Wi-Fi list is detected.

At 303, the mobile terminal is determined to be connected to an AP when the IP address is not in the preset Wi-Fi list.

For the operations at 301 to 303, reference can be made to the corresponding operations of the method for identifying an AP and a hotspot described in conjunction with FIG. 1, which will not be repeated herein.

At 304, whether a current network transmission rate is higher than a preset threshold is determined.

The preset threshold herein may be defaulted by a system or set by a user. The current network transmission rate may be a network transmission rate at current time, or certainly may be an average value of network transmission rates in a preset period. Generally, the network transmission rate is not stable enough, that is, sometimes the network transmission rate is high, and sometimes the network transmission rate is slow. Therefore, an average network transmission rate in a period can be used as the current network transmission rate. The preset period herein may be a period closest to the current time, so that the network transmission rate can be obtained accurately.

At 305, all the at least one application to be upgraded is upgraded when the current network transmission rate is higher than the preset threshold.

In one embodiment, all the at least one application to be upgraded involved in the above operation for upgrading all the at least one application to be upgraded can be specified by a user. For example, an App *A,* an App *B,* an App *C*, and an App *D* that need to be upgraded are displayed on a display screen of the mobile terminal, and the App *A,* the App *C*, and the App *D* may be selected by the user to be upgraded. Considering that, as to some applications, an upgraded version provides a poor user experience , these applications may not be selected to be upgraded.

In one embodiment, the at least one application to be upgraded may include one or more applications. The at least one application to be upgraded may be a type of applications, that is, applications that need to be upgraded are collectively referred to as applications to be upgraded. For different applications, traffic that needs to be consumed during upgrade operation may be different. Therefore, the traffic that needs to be consumed during upgrade operation of each application to be upgraded needs to be estimated. The at least one application to be upgraded includes, but is not limited to, a map application (e.g., Baidu map^{®}, Google map^{®}, etc.), an instant messenger application (e.g., WeChat^{®}, QQ^{®}, etc.), a social application (e.g., Weibo^{®}, Renren^{®}, Facebook^{®}, etc.), a group purchase application (e.g., Dazhongdianping^{®}, Meituan^{®}, etc.), a browser application, a payment application, and the like. The at least one application to be upgraded may include one or more applications to be upgraded.

In one embodiment, when the at least one application to be upgraded includes multiple applications to be upgraded, a usage frequency of each application to be upgraded can be obtained, and all the applications to be upgraded are upgraded in descending order of the usage frequencies of the applications to be upgraded. For example, the applications to be upgraded include the App *A,* the App *B,* and the App *C*, where the usage frequency of the App *B* is greater than that of the App *A,* and the usage frequency of the App *A* is greater than that of the App *C*. In this case, the App *B* is upgraded first, the App *A* is then upgraded after upgrading the App *B*, and after upgrading the App *A,* the App *C* is upgraded.

In one embodiment, when the at least one application to be upgraded includes multiple applications to be upgraded, traffic required by upgrade of each application to be upgraded can be determined, and all the applications to be upgraded are upgraded in ascending order of the traffic required by upgrade of each application to be upgraded. For instance, the applications to be upgraded include the App *A*, the App *B,* and the App *C*, where the traffic required by upgrading the App *B* is greater than that of the App *A*, and the traffic required by upgrading the App *A* is greater than that of the App *C*. In this situation, the App *C* is upgraded first, the App *A* is then upgraded after upgrading the App *C*, and after upgrading the App *A*, the App *B* is upgraded.

In one embodiment, when the at least one application to be upgraded includes multiple applications to be upgraded, part of the multiple applications to be upgraded may be upgraded first, and then the remaining applications may be upgraded.

In one embodiment, when the at least one application to be upgraded includes multiple applications to be upgraded, multiple categories can be obtained by classifying the multiple applications to be upgraded. A priority of each of the multiple categories is determined. All the applications to be upgraded are upgraded according to the priority of each of the multiple categories. Therefore, the applications to be upgraded can be upgraded according to the priorities of the categories.

At 306, part of the at least one application to be upgraded can be upgraded when the current network transmission rate is lower than or equal to the preset threshold.

When the current network transmission rate is lower than or equal to the preset threshold, part of the at least one application to be upgraded can be upgraded. Part of the at least one application to be upgraded may also include two or more applications to be upgraded, and so different applications can be upgraded sequentially. Certainly, in the case that the number of applications to be upgraded is small, all the applications to be upgraded can be upgraded simultaneously.

In one embodiment, for the operation at 306, part of the applications to be upgraded can be upgraded as follows.

61) A usage frequency of each of the applications to be upgraded is determined.

62) Each application to be upgraded that has the usage frequency higher than a preset frequency threshold is upgraded.

The usage frequency of each application to be upgraded can be obtained, and all the applications to be upgraded can be upgraded in descending order of the usage frequencies of all of the applications to be upgraded. For example, the applications to be upgraded include the App *A,* the App *B,* and the App *C*, where the usage frequency of the App *B* is greater than that of the App *A,* and the usage frequency of the App *A* is greater than that of the App *C*. In this case, the App *B* is upgraded first, the App *A* is then upgraded after upgrading the App *B,* and after upgrading the App *A*, the App *C* is upgraded.

By adopting the embodiment of the present disclosure, the IP address of the gateway is obtained when the mobile terminal is in the Wi-Fi connection state. Whether the IP address is in the preset Wi-Fi list is detected. The mobile terminal is determined to be connected to the AP when the IP address is in the preset Wi-Fi list. Whether the current network transmission rate is higher than the preset threshold is determined. All the at least one application to be upgraded can be upgraded when the current network transmission rate is higher than the preset threshold. Part of the at least one application to be upgraded can be upgraded when the current network transmission rate is lower than or equal to the preset threshold. Therefore, whether the mobile terminal is connected to the hotspot or the AP can be distinguished. In the case that the mobile terminal is connected to the AP, upgrading part of or all the at least one application to be upgraded can be determined according to the current network transmission rate.

Consistent with the above embodiment, a device configured to implement the above method for identifying an AP and a hotspot is provided herein below.

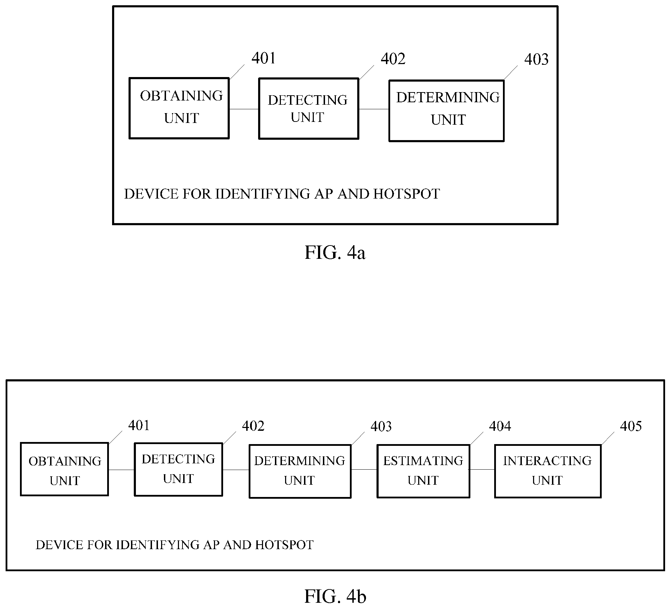

FIG. 4a is a block diagram illustrating a device for identifying an AP and a hotspot according to an embodiment of the present disclosure. The device for identifying an AP and a hotspot provided in this embodiment includes an obtaining unit 401, a detecting unit 402, and a determining unit 403.

The obtaining unit 401 is configured to obtain an IP address of a gateway when a mobile terminal is in a Wi-Fi connection state.

The detecting unit 402 is configured to detect whether the IP address is in a preset Wi-Fi list.

The determining unit 403 is configured to determine that the mobile terminal is connected to a hotspot when the detecting unit 402 detects that the IP address is in the preset Wi-Fi list.

The determining unit 403 is further configured to determine that the mobile terminal is connected to an AP when the detecting unit 402 detects that the IP address is not in the preset Wi-Fi list.

In one embodiment, the preset Wi-Fi list contains at least one of 192.168.40.*X* and 172.20.19.*Y*, where *X* and *Y* are integers ranging from 0 to 255.

In one embodiment, FIG. 4b illustrates a device that is a modification of the device for identifying an AP and a hotspot illustrated in FIG. 4a. Compared with FIG. 4a, the device illustrated in FIG. 4b further includes an estimating unit 404 and an interacting unit 405.

The estimating unit 404 is configured to estimate total traffic required by the at least one application to be upgraded after the determining unit 403 determines that the mobile terminal is connected to the hotspot.

The interacting unit 405 is configured to send an upgrade request carrying the total traffic to the hotspot.

The interacting unit 405 is further configured to upgrade the at least one application to be upgraded when a confirmation message transmitted in response to the upgrade request is received from the hotspot.

In one embodiment, the at least one application to be upgraded includes multiple applications to be upgraded. The estimating unit 404 is configured to estimate traffic required by upgrade of each application to be upgraded, and to obtain the total traffic by adding up the traffic required by upgrade of each application to be upgraded.

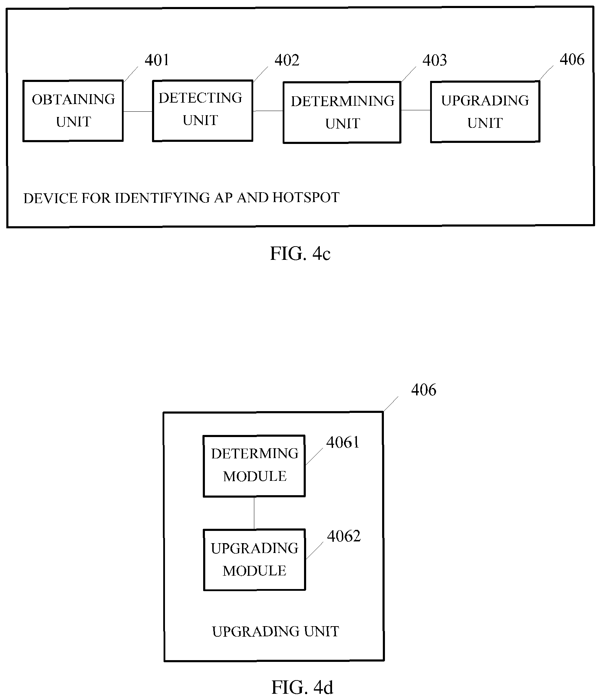

In FIG. 4c illustrates yet another device that is a modification of the device for identifying an AP and a hotspot illustrated in FIG. 4a. Compared with FIG. 4a, the device illustrated in FIG. 4c further includes an upgrading unit 406.

The upgrading unit 406 is configured to upgrade the at least one application to be upgraded after the determining unit 403 determines that the mobile terminal is connected to the AP.

In FIG. 4d is a block diagram illustrating the upgrading unit 406 of the device for identifying an AP and a hotspot illustrated in FIG. 4c. The upgrading unit 406 includes a determining module 4061 and an upgrading module 4062.

The determining module 4061 is configured to determine whether a current network transmission rate is higher than a preset threshold.

The upgrading module 4062 is configured to upgrade all the at least one application to be upgraded when the current network transmission rate is higher than the preset threshold.

The upgrading module 4062 is further configured to upgrade part of the at least one application to be upgraded when the current network transmission rate is lower than or equal to the preset threshold.

In one embodiment, the at least one application to be upgraded includes multiple applications to be upgraded, and the upgrading unit 406 is configured to obtain a usage frequency of each application to be upgraded, and to upgrade all the applications to be upgraded in descending order of the usage frequencies of the applications to be upgraded.

In one embodiment, the at least one application to be upgraded includes multiple applications to be upgraded. The upgrading unit 406 is configured to determine traffic required by upgrade of each application to be upgraded, and to upgrade all the applications to be upgraded in ascending order of the traffic required by upgrade of each application to be upgraded.

In one embodiment, the at least one application to be upgraded includes multiple applications to be upgraded. The upgrading unit 406 is configured to obtain multiple categories by classifying the multiple applications to be upgraded, to determine a priority of each of the multiple categories, and to upgrade all the applications to be upgraded according to the priority of each of the multiple categories.

It can be seen that, by means of the devices for identifying an AP and a hotspot described in the embodiments of the present disclosure, the IP address of the gateway is obtained when the mobile terminal is in the Wi-Fi connection state. Whether the IP address is in the preset Wi-Fi list is detected. The mobile terminal is determined to be connected to the hotspot when the IP address is in the preset Wi-Fi list. The mobile terminal is determined to be connected to the AP when the IP address is not in the preset Wi-Fi list. Therefore, whether the mobile terminal is connected to the hotspot or the AP can be distinguished.

What needs to be noted is that the devices for identifying an AP and a hotspot described in the embodiments of the disclosure are presented in the form of functional units. The term "unit" used herein should be understood as the broadest meaning as possible, and an object for achieving functions defined by each "unit" may be, for example, an application-specific integrated circuit (ASIC), a single circuit, a processor (shared, dedicated, or chipset) for executing one or more software or firmware programs and a memory, a combinational logic circuit, and/or other suitable components that can achieve the above described functions.

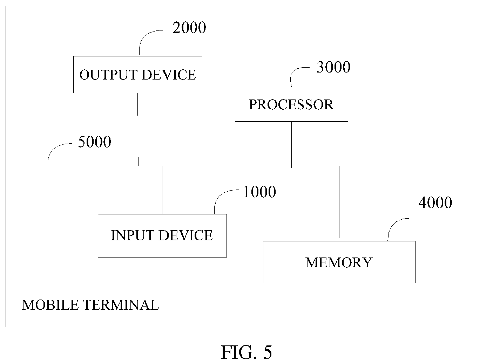

As an example, when the IP address of the mobile terminal has a validity period less than a preset threshold, a sending unit 301 configured to send an IP address renewal request to a first DHCP server within a preset period can be implemented by a mobile terminal illustrated in FIG. 5. In one embodiment, a processor 3000 can invoke executable program codes in a memory 4000 to send the IP address renewal request to the first DHCP server within the preset period when the IP address of the mobile terminal has the validity period less than the preset threshold.

Consistent with the above embodiments, FIG. 5 is a block diagram illustrating a mobile terminal according to an embodiment of the present disclosure. The mobile terminal in the embodiment includes at least one input device 1000, at least one output device 2000, at least one processor 3000 (such as a CPU), and a memory 4000. The input device 1000, the output device 2000, the processor 3000, and the memory 4000 are coupled with each other via a bus 5000.

In an implementation, the at least one input device 1000 may be a touch panel, a physical button, a mouse, or the like.

In an implementation, the at least one output device 2000 may be a display screen.

In an implementation, the memory 4000 may be a high speed RAM memory, or may be a non-volatile memory such as a disk memory. The memory 4000 is configured to store a set of program codes. The input device 1000, the output device 2000, and the processor 3000 are configured to invoke the program codes stored in the memory 4000 to carry out the following.

The processor 3000 is configured to obtain an IP address of a gateway when the mobile terminal is in a Wi-Fi connection state, to detect whether the IP address is in a preset Wi-Fi list, to determine that the mobile terminal is connected to a hotspot when the IP address is in the preset Wi-Fi list, and to determine that the mobile terminal is connected to an AP when the IP address is not in the preset Wi-Fi list.

In one embodiment, after determining that the mobile terminal is connected to the hotspot, the processor 3000 is further configured to estimate total traffic required by at least one application to be upgraded, to send an upgrade request carrying the total traffic to the hotspot, and to upgrade the at least one application to be upgraded when a confirmation message transmitted in response to the upgrade request is received from the hotspot.

In one embodiment, the at least one application to be upgraded includes multiple applications to be upgraded. The processor 3000 configured to estimate the total traffic required by the at least one application to be upgraded is configured to estimate traffic required by upgrade of each application to be upgraded, and to obtain the total traffic by adding up the traffic required by upgrade of each application to be upgraded.

In one embodiment, after determining that the mobile terminal is connected to the AP, the processor 3000 is further configured to upgrade at least one application to be upgraded.

In one embodiment, the processor 3000 configured to upgrade the at least one application to be upgraded is configured to detect whether a current network transmission rate is higher than a preset threshold, to upgrade all the at least one application to be upgraded when the current network transmission rate is higher than the preset threshold, and to upgrade part of the at least one application to be upgraded when the current network transmission rate is lower than or equal to the preset threshold.

In one embodiment, the at least one application to be upgraded includes multiple applications to be upgraded. The processor 3000 configured to upgrade the at least one application to be upgraded is configured to obtain a usage frequency of each application to be upgraded, and to upgrade all the applications to be upgraded in descending order of the usage frequencies of the applications to be upgraded.

In one embodiment, the at least one application to be upgraded includes multiple applications to be upgraded. The processor 3000 configured to upgrade the at least one application to be upgraded is configured to determine traffic required by upgrade of each application to be upgraded, and to upgrade all the applications to be upgraded in ascending order of the traffic required by upgrade of each application to be upgraded.

In one embodiment, the at least one application to be upgraded includes multiple applications to be upgraded. The processor 3000 configured to upgrade the at least one application to be upgraded is configured to obtain multiple categories by classifying the multiple applications to be upgraded, to determine a priority of each of the multiple categories, and to upgrade all the applications to be upgraded according to the priority of each of the multiple categories.

Embodiments of the present disclosure further provide a computer storage medium. The computer storage medium is configured to store programs which, when executed, are operable to implement part or all of operations of the methods for identifying an AP and a hotspot described in the foregoing method embodiments.

Although the present disclosure has been described herein in combination with various embodiments of the present disclosure, in the process of implementing the disclosure seeking for protection, those skilled in the art will understand and derive other embodiments based on the specification, the claims, and the accompanying drawings of the present disclosure as viewed. The term "comprising" in the claims does not exclude other components or steps. In addition, the term "a/ an" or "one" does not exclude a plurality of components or steps. A single processor or other units may fulfill several functions described in the claims. Certain technical features are described in different dependent claims, however, possible combination of these technical features can be made to achieve a good effect.

Those skilled in the art will appreciate that embodiments of the present disclosure can be provided as a method, an apparatus (device), or a computer program product. Accordingly, the above embodiments of present disclosure may be implemented through hardware, software, or any other combination thereof. In addition, the present disclosure may take the form of a computer program product embodied on one or more computer readable storage medium (including but not limited to a disk memory, a CD-ROM, an optical memory, etc.) including computer readable program codes. Computer programs are stored or distributed in a suitable medium, and are provided together with other hardware or are as part of certain hardware, or are distributed in other forms, such as an Internet-based form, other wired or wireless telecommunication-system-based form, or the like.

The present disclosure has been described with reference to flow charts and/or block diagrams of the methods, apparatuses (devices), and computer program products of the embodiments of the disclosure. It will be understood that computer program instructions are operable to implement each procedure of the flow charts and/or each block of the block diagrams, and to implement a combination thereof. These computer program instructions can be provided for a processor of a general-purpose computer, a special-purpose computer, an embedded processor, or other programmable data processing devices to produce a machine, to enable instructions executed by a processor of a computer or other programmable data processing devices to produce a device for implementing functions specified in one or more procedures of the flow charts or one or more blocks of the block diagrams.

These computer program instructions can also be stored in a computer readable memory that can direct a computer or other programmable data processing devices to operate in a certain manner, to enable instructions stored in the computer readable memory to produce an article of manufacture including an instruction device for implementing functions specified in one or more procedures of the flow charts or one or more blocks of the block diagrams.

These computer program instructions can also be loaded into a computer or other programmable data processing devices, to enable a computer or other programmable devices to perform a series of operational steps to achieve computer processing, such that instructions executed on a computer or other programmable devices can provide steps for implementing functions specified in one or more procedures of the flow charts or one or more blocks of the block diagrams.

## Claims

1. A method for identifying an access point, AP, and a hotspot, the method being executed by a processor of a mobile terminal, the method comprising:
pre-storing a preset Wi-Fi list in the mobile terminal;
obtaining (101) an internet protocol, IP, address of a gateway in a process of connecting to an AP or a hotspot, wherein the IP address of the gateway is contained in an Offer message and an acknowledge message transmitted from a dynamic host configuration protocol, DHCP, server to the mobile terminal;
detecting (102) whether the IP address is in the preset Wi-Fi list;
**characterized in that** the method further comprises:
determining (103) that the mobile terminal is connected to a hotspot in response to detecting that the IP address is in the preset Wi-Fi list, wherein the hotspot is created by another mobile terminal;
determining (104) that the mobile terminal is connected to an AP in response to detecting that the IP address is not in the preset Wi-Fi list, wherein the AP is created by a router; and
after determining that the mobile terminal is connected to the hotspot:
estimating (204) total traffic required by at least one application to be upgraded;
sending (205), to the hotspot, an upgrade request carrying the total traffic; and
upgrading (206) the at least one application to be upgraded when a confirmation message transmitted in response to the upgrade request is received from the hotspot.

2. The method of claim 1, wherein the at least one application to be upgraded comprises a plurality of applications to be upgraded, and estimating the total traffic required by the at least one application to be upgraded comprises:
estimating traffic required by upgrade of each of the plurality of applications to be upgraded; and
obtaining the total traffic by adding up the traffic required by upgrade of each of the plurality of applications to be upgraded.

3. The method of claim 1, further comprising the following after determining that the mobile terminal is connected to the AP:
upgrading at least one application to be upgraded.

4. The method of claim 1, wherein upgrading the at least one application to be upgraded comprises:
determining (304) whether a current network transmission rate is higher than a preset threshold;
upgrading (305) all the at least one application to be upgraded in response to determining that the current network transmission rate is higher than the preset threshold; and
upgrading (306) part of the at least one application to be upgraded in response to determining that the current network transmission rate is lower than or equal to the preset threshold.

5. The method of claim 1, wherein the at least one application to be upgraded comprises a plurality of applications to be upgraded, and upgrading the at least one application to be upgraded comprises:
obtaining a usage frequency of each of the plurality of applications to be upgraded; and
upgrading all the plurality of applications to be upgraded in descending order of the usage frequency of each of the plurality of applications to be upgraded.

6. The method of claim 1, wherein the at least one application to be upgraded comprises a plurality of applications to be upgraded, and upgrading the at least one application to be upgraded comprises:
determining traffic required by upgrade of each of the plurality of applications to be upgraded; and
upgrading all the plurality of applications to be upgraded in ascending order of the traffic required by upgrade of each of the plurality of applications to be upgraded.

7. The method of claim 1, wherein the at least one application to be upgraded comprises a plurality of applications to be upgraded, and upgrading the at least one application to be upgraded comprises:
obtaining a plurality of categories by classifying the plurality of applications to be upgraded;
determining a priority of each of the plurality of categories; and
upgrading all the plurality of applications to be upgraded according to the priority of each of the plurality of categories.

8. A mobile terminal, comprising:
a processor (3000); and
a memory (4000);
the processor (3000) being configured to invoke codes or instructions stored in the memory (4000) to implement the method of any of claims 1 to 7.

9. A computer storage medium, configured to store computer programs which when executed by the processor of a mobile terminal cause the processor to to implement the method of any of claims 1 to 7.

## Patentansprüche

1. Verfahren zum Identifizieren eines Access Point, AP, und eines Hotspots, wobei das Verfahren von einem Prozessor eines mobilen Endgeräts ausgeführt wird, wobei das Verfahren Folgendes umfasst:
Vorspeichern einer voreingestellten WiFi-Liste in dem mobilen Endgerät;
Erhalten (101) einer Internet-Protokoll-Adresse, IP-Adresse, eines Gateways bei einem Prozess einer Verbindung mit einem AP oder einem Hotspot, wobei die IP-Adresse des Gateways in einer Offer-Nachricht und einer Acknowledge-Nachricht, die von einem DHCP-Server (DHCP = Dynamic Host Configuration Protocol) an das mobile Endgerät übertragen werden, enthalten ist;
Detektieren (102), ob die IP-Adresse in der voreingestellten WiFi-Liste steht;
**dadurch gekennzeichnet, dass** das Verfahren ferner Folgendes umfasst:
Bestimmen (103), dass das mobile Endgerät mit einem Hotspot verbunden ist, als Reaktion auf das Detektieren, dass die IP-Adresse in der voreingestellten WiFi-Liste steht, wobei der Hotspot von einem anderen mobilen Endgerät hergestellt wird;
Bestimmen (104), dass das mobile Endgerät mit einem AP verbunden ist, als Reaktion auf das Detektieren, dass die IP-Adresse nicht in der voreingestellten WiFi-Liste steht, wobei der AP von einem Router hergestellt wird; und
nach dem Bestimmen, dass das mobile Endgerät mit dem Hotspot verbunden ist:
Schätzen (204) eines gesamten Verkehrs, der von mindestens einer upzugradenden Anwendung benötigt wird;
Senden (205) einer Upgrade-Anforderung, die den gesamten Verkehr übermittelt, an den Hotspot; und
Upgraden (206) der mindestens einen upzugradenden Anwendung, sobald eine als Reaktion auf die Upgrade-Anforderung übertragene Bestätigungsnachricht von dem Hotspot empfangen wird.

2. Verfahren nach Anspruch 1, wobei die mindestens eine upzugradende Anwendung eine Vielzahl upzugradender Anwendungen umfasst und das Schätzen des gesamten Verkehrs, der von der mindestens einen upzugradenden Anwendung benötigt wird, Folgendes umfasst:
Schätzen eines Verkehrs, der durch ein Upgrade jeder der Vielzahl upzugradender Anwendungen benötigt wird; und
Erhalten des gesamten Verkehrs durch Addieren des Verkehrs, der durch ein Upgrade jeder der Vielzahl upzugradender Anwendungen benötigt wird.

3. Verfahren nach Anspruch 1, das ferner Folgendes nach dem Bestimmen, dass das mobile Endgerät mit dem AP verbunden ist, umfasst:
Upgraden mindestens einer upzugradenden Anwendung.

4. Verfahren nach Anspruch 1, wobei das Upgraden der mindestens einen upzugradenden Anwendung Folgendes umfasst:
Bestimmen (304), ob eine momentane Netzübertragungsgeschwindigkeit größer als ein voreingestellter Schwellenwert ist;
Upgraden (305) aller der mindestens einen upzugradenden Anwendung als Reaktion auf das Bestimmen, dass die momentane Netzübertragungsgeschwindigkeit größer als der voreingestellte Schwellenwert ist; und
Upgraden (306) eines Teils der mindestens einen upzugradenden Anwendung als Reaktion auf das Bestimmen, dass die momentane Netzübertragungsgeschwindigkeit kleiner als oder gleich dem voreingestellten Schwellenwert ist.

5. Verfahren nach Anspruch 1, wobei die mindestens eine upzugradende Anwendung eine Vielzahl upzugradender Anwendungen umfasst und das Upgraden der mindestens einen upzugradenden Anwendung Folgendes umfasst:
Erhalten einer Nutzungsfrequenz jeder der Vielzahl upzugradender Anwendungen; und
Upgraden aller der Vielzahl upzugradender Anwendungen in absteigender Reihenfolge der Nutzungsfrequenz jeder der Vielzahl upzugradender Anwendungen.

6. Verfahren nach Anspruch 1, wobei die mindestens eine upzugradende Anwendung eine Vielzahl upzugradender Anwendungen umfasst und das Upgraden der mindestens einen upzugradenden Anwendung Folgendes umfasst:
Bestimmen eines Verkehrs, der durch ein Upgrade jeder der Vielzahl upzugradender Anwendungen benötigt wird; und
Upgraden aller der Vielzahl upzugradender Anwendungen in aufsteigender Reihenfolge des Verkehrs, der durch ein Upgrade jeder der Vielzahl upzugradender Anwendungen benötigt wird.

7. Verfahren nach Anspruch 1, wobei die mindestens eine upzugradende Anwendung eine Vielzahl upzugradender Anwendungen umfasst und das Upgraden der mindestens einen upzugradenden Anwendung Folgendes umfasst:
Erhalten einer Vielzahl von Kategorien durch Klassifizieren der Vielzahl upzugradender Anwendungen;
Bestimmen einer Priorität jeder der Vielzahl von Kategorien; und
Upgraden aller der Vielzahl upzugradender Anwendungen in Abhängigkeit von der Priorität jeder der Vielzahl von Kategorien.

8. Mobiles Endgerät, das Folgendes umfasst:
einen Prozessor (3000); und
einen Speicher (4000);
wobei der Prozessor (3000) konfiguriert ist, um Codes oder Anweisungen, die in dem Speicher (4000) gespeichert sind, aufzurufen, um das Verfahren nach einem der Ansprüche 1 bis 7 zu implementieren.

9. Computerspeichermedium, das konfiguriert ist, um Computerprogramme zu speichern, die, wenn sie vom Prozessor eines mobilen Endgeräts ausgeführt werden, bewirken, dass der Prozessor das Verfahren nach einem der Ansprüche 1 bis 7 implementiert.

## Revendications

1. Procédé d'identification d'un point d'accès (*access point,* AP) et d'un point d'accès sans fil, le procédé étant exécuté par un processeur d'un terminal mobile, le procédé comprenant :
le préstockage d'une liste Wi-Fi prédéfinie dans le terminal mobile ;
l'obtention (101) d'une adresse de protocole internet (*internet protocol,* IP) d'une passerelle dans un processus de connexion à un AP ou à un point d'accès sans fil, l'adresse IP de la passerelle étant contenue dans un message d'offre et un message d'accusé de réception transmis à partir d'un serveur de protocole de configuration d'hôte dynamique (*dynamic host configuration protocol,* DHCP) au terminal mobile ;
la détection (102) quant à savoir si l'adresse IP est dans la liste Wi-Fi prédéfinie ;
**caractérisé en ce que** le procédé comprend en outre :
la détermination (103) que le terminal mobile est connecté à un point d'accès sans fil en réponse à la détection du fait que l'adresse IP est dans la liste Wi-Fi prédéfinie, le point d'accès sans fil étant créé par un autre terminal mobile ;
la détermination (104) que le terminal mobile est connecté à un point d'accès en réponse à la détection du fait que l'adresse IP n'est pas dans la liste Wi-Fi prédéfinie, le point d'accès étant créé par un routeur ; et
après avoir déterminé que le terminal mobile est connecté au point d'accès sans fil :
l'estimation (204) du trafic total requis par au moins une application à mettre à niveau ;
l'envoi (205), au point d'accès sans fil, d'une demande de mise à niveau portant le trafic total ; et
la mise à niveau (206) de l'au moins une application à mettre à niveau lorsqu'un message de confirmation transmis en réponse à la demande de mise à niveau est reçu en provenance du point d'accès sans fil.

2. Procédé selon la revendication 1, dans lequel l'au moins une application à mettre à niveau comprend une pluralité d'applications à mettre à niveau, et l'estimation du trafic total requis par l'au moins une application à mettre à niveau comprend :
l'estimation du trafic requis par la mise à niveau de chaque application de la pluralité d'applications à mettre à niveau ; et
l'obtention du trafic total par ajout du trafic requis par la mise à niveau de chaque application de la pluralité d'applications à mettre à niveau.

3. Procédé selon la revendication 1, comprenant en outre les étapes suivantes après avoir déterminé que le terminal mobile est connecté à l'AP :
mettre à niveau au moins une application à mettre à niveau.

4. Procédé selon la revendication 1, dans lequel la mise à niveau de l'au moins une application à mettre à niveau comprend :
la détermination (304) quant à savoir si un débit de transmission de réseau actuel est supérieur à un seuil prédéfini ;
la mise à niveau (305) de la totalité de l'au moins une application à mettre à niveau en réponse à la détermination du fait que le débit de transmission de réseau actuel est supérieur au seuil prédéfini ; et
la mise à niveau (306) d'une partie de l'au moins une application à mettre à niveau en réponse à la détermination du fait que le débit de transmission de réseau actuel est inférieur ou égal au seuil prédéfini.

5. Procédé selon la revendication 1, dans lequel l'au moins une application à mettre à niveau comprend une pluralité d'applications à mettre à niveau, et la mise à niveau de l'au moins une application à mettre à niveau comprend :
l'obtention d'une fréquence d'utilisation de chaque application de la pluralité d'applications à mettre à niveau ; et
la mise à niveau de toutes les applications à mettre à niveau dans l'ordre décroissant de la fréquence d'utilisation de chaque application de la pluralité d'applications à mettre à niveau.

6. Procédé selon la revendication 1, dans lequel l'au moins une application à mettre à niveau comprend une pluralité d'applications à mettre à niveau, et la mise à niveau de l'au moins une application à mettre à niveau comprend :
la détermination du trafic requis par la mise à niveau de chaque application de la pluralité d'applications à mettre à niveau ; et
la mise à niveau de toutes les applications à mettre à niveau dans l'ordre croissant du trafic requis par la mise à niveau de chaque application de la pluralité d'applications à mettre à niveau.

7. Procédé selon la revendication 1, dans lequel l'au moins une application à mettre à niveau comprend une pluralité d'applications à mettre à niveau, et la mise à niveau de l'au moins une application à mettre à niveau comprend :
l'obtention d'une pluralité de catégories en classant la pluralité d'applications à mettre à niveau ;
la détermination d'une priorité de chaque catégorie de la pluralité de catégories ; et
la mise à niveau de toutes les applications à mettre à niveau selon la priorité de chaque catégorie de la pluralité de catégories.

8. Terminal mobile, comprenant :
un processeur (3000) ; et
une mémoire (4000) ;
le processeur (3000) étant configuré pour invoquer des codes ou des instructions stocké (e) s dans la mémoire (4000) pour mettre en œuvre le procédé selon l'une quelconque des revendications 1 à 7.

9. Support de stockage informatique, configuré pour stocker des programmes informatiques qui, lorsqu'ils sont exécutés par le processeur d'un terminal mobile, amènent le processeur à mettre en œuvre le procédé selon l'une quelconque des revendications 1 à 7.
